# EUROPEAN PATENT SPECIFICATION

(11) **EP 4 401 921 B1**
(45) Date of publication and mention of the grant of the patent: **25.06.2025**
(21) Application number: 22765854.9
(22) Date of filing: 18.08.2022
(51) Int. Cl.: B25B 23/14, B25B 23/147, B25B 21/00

(54) **A POWER TOOL AND A METHOD OF DETERMINING TORQUE**
ELEKTROWERKZEUG UND VERFAHREN ZUR BESTIMMUNG DES DREHMOMENTS
OUTIL ÉLECTRIQUE ET PROCÉDÉ DE DÉTERMINATION DE COUPLE

(30) Priority: 17.09.2021 SE 2130244
(43) Date of publication of application: 24.07.2024
(73) Proprietor: Atlas Copco Industrial Technique AB, 105 23 Stockholm (SE)
(72) Inventor: PRAKASH, Shyam Geo, 131 50 Salsjö-Duvnäs (SE); BOSSI SILVA, GUILLERMO Emiliano, 177 33 Järfälla (SE)
(74) Representative: Atlas Copco Industrial Technique AB
(86) International application number: PCT/EP2022/073023
(87) International publication number: WO 2023/041280

(56) References cited:
- WO-A1-2010/047635
- US-A1- 2011 132 630
- US-A1- 2011 185 864
- US-A1- 2019 262 979

## Description

### TECHNICAL FIELD

The present disclosure generally relates to electrically powered tightening tools.

### BACKGROUND

Industrial tightening tools such as nutrunners are widely used in the manufacturing industry, for example in vehicle manufacturing and the aerospace industry.

It is usually required that the operator receives feedback about the status of each tightening operation. Thus, for each nut, bolt, or screw that has been tightened, the operator needs to be ensured that the tightening has been made correctly, i.e. with the prescribed torque. The applied torque may also be documented in a database for each nut, bolt, or screw for all the work pieces that are manufactured.

Tightening tools may comprise a clutch that is released when the bolt, screw, or nut has been tightened with the prescribed torque. Such tightening tools are sometimes referred to as "clutch tools" within the industry. Clutch tools are generally less complex and therefore cheaper than professional tightening tools without a clutch.

US 2011/132630 A1 discloses a screw fastening device, wherein the drive force of an electric motor is transmitted to a rotating shaft and via a clutch mechanism to a tool socket. The clutch mechanism comprises a torque sensor, which is formed from at least one strain gauge arranged in a gauge base, which is mounted floatingly around said rotating shaft.

US 2019/262979 A1 discloses an electric motor-driven screwdriver, wherein the tightening torque control may be realized by changing the setting of the clutch action starting torque by adapting the spring force of a spring urging a first clutch plate is urged toward a second clutch plate, wherein the spring force can be monitored by a sensor.

### SUMMARY

It would be desirable to be able to provide functionality available in the more expensive professional tightening tools without a clutch in clutch tools.

An object of the present disclosure is to provide a power tool which solves, or at least mitigates, problems of the prior art.

There is hence according to a first aspect of the present invention provided a power tool as defined in claim 1 comprising: a housing, an electric motor comprising a rotor, a clutch comprising: a pressure plate configured to be rotatably driven by the rotor, a cam follower plate, a shaft rotationally fixed relative to the cam follower plate, and a preloaded resilient member arranged around the shaft and configured to press the cam follower plate against the pressure plate to rotationally fix the cam follower plate relative to the pressure plate; a stationary body arranged around the shaft and being stationary relative to the housing, an axial force sensor arranged on the body, and a thrust bearing or slip ring connected to the shaft and to the axial force sensor, wherein the resilient member exerts an axial force on the thrust bearing or slip ring, and wherein the axial force sensor is configured to detect the axial force, and convert it to a measurement signal .

Using the measurement signal, it is possible to accurately determine the torque in a clutch tool without the use of an expensive torque transducer, or a Hall sensor which has low accuracy and is noisy. Additionally, the torque may be determined on the output shaft, i.e. after the gears. In tightening tools without a clutch, the torque is normally determined before the gears. By determining the torque at the output shaft, the torque is determined for the rotating shaft actually driving the nut/bolt/screw and thus any fault in the gears resulting in faulty or no torque at the output shaft will be detected by the axial force sensor.

One embodiment comprises processing circuitry configured to convert the measurement signal to torque.

The measurement signal may be an electric signal. The measurement signal may for example be a voltage. The voltage may change due to a change in the axial force applied onto the thrust bearing or slip ring by the resilient member.

The voltage may be converted to an axial force, which in turn may be converted to a torque. Alternatively, the voltage may be converted directly to torque.

A certain voltage or axial force corresponds to a certain torque, and thus the torque can be determined based on the measurement by the axial force sensor.

For example, the change in axial force from the axial force when the resilient member is in a default compressed state to a state in which the resilient member is further compressed due to rotation and the resulting axial displacement of the cam follower plate may be detected by the axial force sensor. This change in axial force may be used to determine the torque.

With the resilient member being in the default compressed state is herein meant the default preloaded state of the resilient member around the shaft in which it is minimally compressed. In the default compressed state the clutch is fully engaged and the rotor is at a standstill.

The axial force sensor may for example comprise a load cell.

The load cell may for example be a Wheatstone bridge. A voltage may be provided across the Wheatstone bridge and the potential difference between its midpoints, which when the resilient member is in the default compressed state may be zero, can be measured. The change in magnitude of the voltage between the midpoints corresponds to a change in axial force, from an axial force when the resilient member is in the default compressed state to an axial force when the resilient member is further compressed due to the rotation and the resulting axial displacement of the cam follower plate.

According to one variation, the power tool may comprise a transmitter configured to wirelessly transmit the measurement by the axial force sensor to an external device. The external device, such as a server, comprising processing circuitry may be in this case be configured to convert the measurement to torque. The power tool and the external device may form a power tool monitoring system.

According to one embodiment the processing circuitry is configured to convert the measurement signal to torque using a look-up table between axial force and torque or voltage and torque or by means of at least one equation.

The axial force increases proportionally with compression of the resilient member and so does the measurement signal output by the axial force sensor. For example, the resistance of the load cell changes linearly as the axial force increases, resulting in that the measurement signal that is output by the axial force sensor also increases linearly with the axial force.

The torque is directly proportional to the displacement, by compression, of the resilient member.

It is thus possible to monitor the torque during the entire tightening operation. As quality assurance, each tightening operation may thus be recorded/monitored.

The at least one equation describes the relationship between resilient member displacement, or axial force, and torque, or between the measurement signal and torque.

The displacement of the resilient member, or axial force, may be derived from the voltage output by the axial force sensor.

The look-up table may provide conversion from voltage to torque, voltage to axial force to torque, or axial force to torque. In case the look-up table provides conversion only between axial force and torque, another look-up table may be used for converting the voltage to axial force.

One embodiment comprises an indicator, wherein the processing circuitry is configured to compare a reference parameter value of the resilient member when the resilient member is in a default compressed state with the measurement signal obtained when the resilient member is in the default compressed state or with said measurement signal converted to axial force, wherein the indicator is configured to provide an indication in case the measurement signal or measurement signal converted to axial force deviates with more than a threshold value from the reference parameter value.

The reference parameter value has the same unit as the parameter with which it is compared, i.e. the measurement signal or the axial force.

A voltage of zero between the midpoints of the Wheatstone bridge may correspond to a reference parameter value when the resilient member is in the default compressed state. For example, if the voltage output by the axial force sensor is zero when the resilient member is in the default compressed state, then the measurement signal obtained the resilient member is in the default compressed state is equal to the reference parameter value.

The reference parameter value may for example be a voltage or an axial force.

The indicator may for example be a display screen configured to display that the measurement signal obtained when the resilient member is in the default compressed state deviates with more than a threshold value from the reference parameter value, one or more indicator lamps configured to light up or turn off when the measurement signal obtained when the resilient member is in the default compressed state deviates with more than a threshold value from the reference parameter value, or a vibration device configured to cause the power tool to vibrate when the measurement signal obtained when the resilient member is in the default compressed state deviates with more than a threshold value from the reference parameter value.

Although the resilient member may be specified to last for a predetermined number of contractions and expansions, these specifications may not hold under all operating conditions For example, in some harsh environment such as highly corrosive environments e.g. high saline environments, the resilient member may wear out faster than specified. By monitoring whether the axial force sensor measures the reference parameter value when the resilient member is in the default compressed state, the condition of the resilient member may be determined. The resilient member can thus be changed to a new resilient member when the measurement signal obtained when the resilient member is in the default compressed state deviates with more than a threshold value from the reference parameter value, or alternatively it may be necessary to calibrate the axial force provided by resilient member in the default compressed state to a predefined preloading force.

One embodiment comprises an indicator configured to indicate when the torque reaches a predetermined maximum torque. The predetermined maximum torque may be the torque at which the clutch is released. The user will thereby know that the tightening operation has been successful and that it fulfils specifications.

The processing circuitry may according to one example be configured to determine whether the torque reaches the predetermined maximum torque by comparing the torque with the predetermined maximum torque.

Since it is known how much the resilient member will compress when the clutch is released, for example because the geometry of the clutch is known, the highest torque determined will give an indication of the condition of the resilient member or of the calibration. The power tool may be configured to indicate or report that there is a condition with the resilient member which needs to be addressed by changing the resilient member or performing a calibration.

According to one embodiment the axial force sensor is sandwiched between the body and the thrust bearing or slip ring.

According to one embodiment the spring extends between the cam follower plate and the thrust bearing or slip ring.

According to one embodiment a first axial end of the spring is in direct contact with the thrust bearing or slip ring.

According to one embodiment a second axial end of the resilient member is in direct contact with the cam follower plate.

According to one embodiment the resilient member is a compression spring.

One embodiment comprises gears arranged between the rotor and the pressure plate.

There is according to a second aspect of the present invention provided a method of measuring an axial force in a power tool, as defined in claim 12, the power tool comprising: a housing, an electric motor comprising a rotor, a clutch comprising: a pressure plate configured to be rotatably driven by the rotor, a shaft rotationally fixed relative to the cam follower plate, a cam follower plate, a shaft rotationally locked relative to the cam follower plate, and a preloaded resilient member arranged around the shaft and configured to press the cam follower plate against the pressure plate to rotationally fix the cam follower plate relative to the pressure plate; a stationary body arranged around the shaft and being stationary relative to the housing, an axial force sensor arranged on the body, and a thrust bearing or slip ring arranged around the shaft, wherein the resilient member exerts an axial force on the thrust bearing or slip ring, and wherein the axial force sensor is configured to detect the axial force, and output a measurement signal, wherein the method comprises: a) obtaining the measurement signal from the axial force sensor.

One embodiment comprises b) converting the measurement signal to torque.

According to one embodiment the converting involves using a look-up table between axial force and torque or voltage and torque or by means at least one equation.

One embodiment comprises comparing a reference parameter value of the resilient member when the resilient member is in a default compressed state with the measurement signal obtained when the resilient member is in the default compressed state or with said measurement signal converted to axial force, wherein the indicator is configured to provide an indication in case the measurement signal or measurement signal converted to axial force deviates with more than a threshold value from the reference parameter value.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a perspective view of an example of a tightening tool;
Fig 2 schematically shows an example of a clutch of the tightening tool in Fig. 1;
Fig. 3 schematically shows a block diagram of an example of the tightening tool in Fig. 1; and
Fig. 4 is a flowchart of a method of measuring an axial force in a power tool.

### DETAILED DESCRIPTION

The invention will now be described more fully hereinafter with reference to the accompanying drawings, in which exemplifying embodiments are shown. The invention may, however, be embodied in many different forms and should not be construed as limited to the embodiments set forth herein; rather, these embodiments are provided by way of example so that this disclosure will be thorough and complete, and will fully convey the scope of the invention as defined by the claims to those skilled in the art. Like numbers refer to like elements throughout the description.

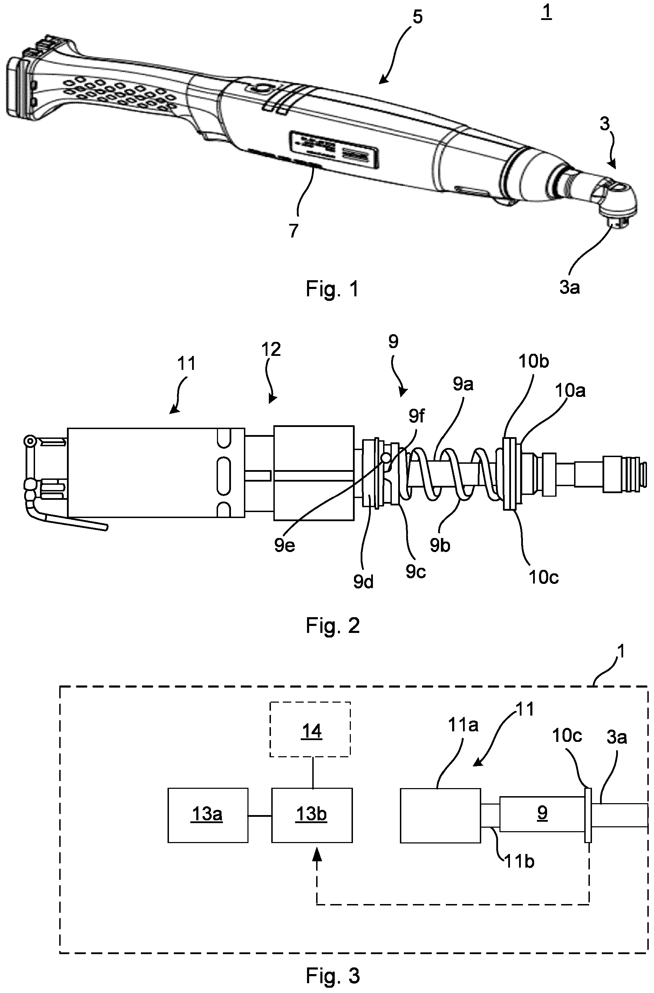

Fig. 1 shows an example of a power tool 1. The power tool 1 is a clutch tool.

The power tool 1 may be cordless or electrically powered via a cord.

The power tool 1 may for example be a nutrunner or a screwdriver.

The power tool 1 has a tool head 3 and a main body 5. The tool head 3 is attached to the main body 5. The tool head 3 is in the example angled but could alternatively be straight.

The tool head 3 has an output shaft 3a. The output shaft 3a is configured to be rotatably driven and engage with a fastener such as a nut, a bolt, or a screw.

The power tool 1 has a housing 7. The power tool 1 comprises an electric motor configured to drive the output shaft 3a. The electric motor is arranged in the housing 7.

Fig. 2 shows an example of some internal components of a power tool 1, here shown with a straight tool head.

The power tool 1 comprises a clutch 9 configured to connect the electric motor 11 to the output shaft 3a.

The electric motor 11 has a stator 11a (shown in Fig. 3), and a rotor 11b (shown in Fig. 3) configured to rotate relative to the stator. The rotor is configured to be connected to the output shaft 3a via the clutch 9.

The power tool 1 comprises gears 12 connecting the rotor to the clutch 9.The exemplified clutch 9 comprises a rotatable shaft 9a, which is the output shaft 3a or which is rotatably fixed relative to the output shaft 3a, a preloaded resilient member 9b, in the following exemplified by a compression spring, provided around the shaft 9a, a cam follower plate 9c rotationally fixed relative to the shaft 9a, and a pressure plate 9d which is rotationally fixed relative to the rotor.

The power tool 1 is calibrated such that the torque required to release the clutch is a predetermined maximum torque. The calibration involves setting the spring in a default compressed state from which further compression causes the clutch to release at the predetermined maximum torque.

The spring 9b pushes the cam follower plate 9c against the pressure plate 9d which thereby engage such that the rotation of the rotor and the pressure plate 9d is transferred to the cam follower plate 9c and the shaft 9a. According to the example shown in Fig. 2, the cam follower plate 9c and the pressure plate 9d have balls 9e arranged between them, provided in a respective axial recess or cut-out in the pressure plate 9d, which prevent relative rotation between the two plates 9c, 9d as long as the torque is smaller than a threshold value. The cam follower plate 9c has cam surfaces 9f configured to cooperate with the balls 9e. As a nut, bolt or screw is tightened by the rotation of the output shaft 3a the torque eventually increases to the specified level required for the clutch 9 to release. Up to this point, the cooperation between the cam surfaces 9f and the balls 9e causes the cam follower plate 9c to move axially away from the pressure plate 9d as the spring 9b is being further compressed. The clutch 9 is released when the cam follower plate 9c and the pressure plate 9d disengage, allowing the pressure plate 9d to rotate freely. The cam follower plate 9c is thus not driven by the pressure plate 9d when the clutch 9 has released.

Other types of cam follower mechanisms which do not use balls are also envisaged, as would be apparent to the skilled person.

The power tool 1 comprises a stationary body 10a arranged around the shaft 9a. The stationary body 10a is stationary relative to the housing 7.

The power tool 1 comprises an axial force sensor 10c. The axial force sensor 10b may for example be a load cell. The axial force sensor 10c is arranged on the stationary body 10a. The axial force sensor 10c is thus arranged stationary relative to the housing 7.

The power tool 1 comprises a thrust bearing or slip ring 10b. The thrust bearing or slip ring 10b has a first component connected to the shaft 9a and second component which is free to rotate relative to the first component connected to the axial force sensor 10c.

The axial force sensor 10c is sandwiched between the stationary body 10a and the thrust bearing or slip ring 10b.

The spring 9b extends between the cam follower plate 9c and the thrust bearing or slip ring 10b. A first axial end of the spring 9b may be in direct contact with the thrust bearing or slip ring 10b. A second axial end of the spring 9b may be in direct contact with the cam follower plate 9c.

The spring 9a exerts an axial force onto the thrust bearing or slip ring 10b. Thus, as the torque increases and the cam follower plate 9c moves axially towards the thrust bearing or slip ring 10b and the spring 9a is further compressed, the axial force applied to the thrust bearing or slip ring 10b is increased.

The axial force sensor 10c is configured to detect the axial force applied by the spring 9a onto the thrust bearing or slip ring 10b. The axial force sensor 10c is configured to output a measurement signal in response to detecting the axial force.

The power tool 1 may according to one example be configured to process the measurement signal to determine the torque. Alternatively, or additionally, the power tool 1 may be configured to wirelessly transmit the measurement signal to an external device for external processing.

Fig. 3 schematically shows a block diagram of an example of the power tool 1 configured to process the measurement signal to determine the torque. The block diagram does not show all internal components of the power tool 1.

The exemplified power tool 1 comprises a storage medium 13a comprising computer code, and processing circuitry 13b configured to execute the computer code, causing the power tool 1 to perform the method(s) as disclosed herein.

The storage medium 13a may for example be embodied as a memory, such as a random access memory (RAM), a read-only memory (ROM), an erasable programmable read-only memory (EPROM), or an electrically erasable programmable read-only memory (EEPROM) and more particularly as a nonvolatile storage medium of a device in an external memory such as a USB (Universal Serial Bus) memory or a Flash memory, such as a compact Flash memory.

The processing circuitry 13b may for example use any combination of one or more of a suitable central processing unit (CPU), multiprocessor, microcontroller, digital processor (DSP), application specific integrated circuit (ASIC), field programmable gate arrays (FPGA) etc.

The processing circuitry 13b is according to the example configured to receive the measurement signal from the axial force sensor 10c and convert the measurement signal to torque. Furthermore, according to some variations, the processing circuitry 13b may be configured to compare the measurement signal, or an axial force obtained by converting the measurement signal, with a reference parameter value to determine the condition of the spring 9b, and/or to compare the torque with a predetermined maximum torque to determine whether the torque reaches the predetermined maximum torque.

The power tool 1 may according to one example comprise an indicator 14, such as a display screen, one or more indicator lamps, and/or a vibration device configured to vibrate the power tool 1. The processing circuitry 13b may be configured to control the indicator 14 to provide an indication in case the measurement signal or the axial force obtained by converting the measurement signal deviates with more than a threshold value from the reference parameter value, and/or in case the torque reaches the predetermined maximum torque.

It is to be noted that according to one example, the processing circuitry may be external to the power tool 1. The processing circuitry may for example be provided in an external device such as a server. In this case, the processing disclosed in the following may be carried out by the external device instead of the power tool 1.

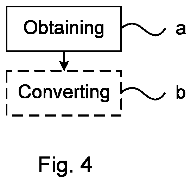

A method of determining an axial force in the power tool 1 will now be described with reference to Fig. 4.

The method may be carried out repeatedly during a tightening operation, for example during the entire tightening operation. During a tightening operation, the electric motor 11 is controlled such that the rotor 11b rotates.

The method may according to some example additionally be carried out between tightening operations when the electric motor 11 is in standstill.

In a step a) the processing circuitry 13b obtains the measurement signal from the axial force sensor 10c.

The measurement signal may be a voltage output by the axial force sensor 10c in response to detecting an axial force applied onto the axial force sensor 10c by the spring 9b via the thrust bearing or slip ring 10b.

In a step b) the measurement signal is converted to torque. The measurement signal may for example first be converted to axial force, which in turns is converted to torque. Alternatively, the measurement signal may be converted directly to torque.

The conversion may be made using a look-up table between the measurement signal and torque, or between the measurement signal and axial force. In the latter case, a further look-up table between axial force and torque may be used to determine the torque.

The look-up table(s) is/are predetermined and may be created in the design phase of the power tool 1.

Alternatively, the conversion may be made using at least one equation. The at least one equation may be at least one linear equation.

The at least one equation may include an equation describing the relationship between spring displacement, or axial force, and torque, or between the measurement signal and torque. Alternatively, two equations may be used: one between the measurement signal and displacement or axial force, and one between displacement or axial force and torque.

According to one example, a measurement signal may be obtained when the spring 9b is in the default compressed state. This measurement signal may be compared with a reference parameter value, which may be a reference voltage when the spring is in the default compressed state. In case the measurement signal deviates with more than a threshold value from the reference voltage, the indicator may be configured to indicate this to the user. Alternatively, the measurement signal may be converted to an axial force and compared with a reference parameter value, which may be a reference axial force when the spring is in the default compressed state. In case the axial force deviates with more than a threshold value from the reference axial force, the indicator 14 may be configured to indicate this to the user. As a result, the user will become aware of when it is time to change the spring 9b.

According to one example, the torque obtained in step b) may be compared with a predetermined maximum torque during a tightening operation. In case the torque reaches the predetermined maximum torque, the power tool 1 may be configured to indicate this by means of the indicator 14.

The invention has mainly been described above with reference to a few examples. However, as is readily appreciated by a person skilled in the art, other embodiments than the ones disclosed above are equally possible within the scope of the invention, as defined by the appended claims.

## Claims

1. A power tool (1) comprising:
- a housing (7),
- an electric motor (11) comprising a rotor (11b),
- a clutch (9) comprising:
a pressure plate (9d) configured to be rotatably driven by the rotor (11b),
a cam follower plate (9c),
a shaft (3a, 9a) rotationally fixed relative to the cam follower plate (9c), and
a preloaded resilient member (9b) arranged around the shaft (3a, 9a) and configured to press the cam follower plate (9c) against the pressure plate (9d) to rotationally fix the cam follower plate (9c) relative to the pressure plate (9d);
- a stationary body (10a) arranged around the shaft (3a, 9a) and being stationary relative to the housing (7),
- an axial force sensor (10c) arranged on the stationary body (10a), and
- a thrust bearing or slip ring (10b) connected to the shaft (3a, 9a) and to the axial force sensor (10c),
wherein the resilient member (9b) exerts an axial force on the thrust bearing or slip ring (10b), and
wherein the axial force sensor (10c) is configured to detect the axial force and convert it to a measurement signal.

2. The power tool (1) as claimed in claim 1, comprising processing circuitry (13b) configured to convert the measurement signal to torque.

3. The power tool (1) as claimed in claim 2, wherein the processing circuitry (13b) is configured to convert the measurement signal to torque using a look-up table between axial force and torque or voltage and torque or by means of an equation.

4. The power tool (1) as claimed in claims 2 or 3, comprising an indicator, wherein the processing circuitry (13b) is configured to compare a reference parameter value of the resilient member (9b) when the resilient member (9b) is in a default compressed state with the measurement signal obtained when the resilient member (9b) is in the default compressed state or with said measurement signal converted to axial force, wherein the indicator is configured to provide an indication in case the measurement signal or measurement signal converted to axial force deviates with more than a threshold value from the reference parameter value.

5. The power tool (1) as claimed in any of the preceding claims, comprising an indicator configured to indicate when the torque reaches a predetermined maximum torque value.

6. The power tool (1) as claimed in any of the preceding claims, wherein the axial force sensor (10c) is sandwiched between the body (10a) and the thrust bearing or slip ring (10b).

7. The power tool (1) as claimed in any of the preceding claims, wherein the resilient member (9b) extends between the cam follower plate (9c) and the thrust bearing or slip ring (10b).

8. The power tool (1) as claimed in any of the preceding claims, wherein a first axial end of the resilient member (9b) is in direct contact with the thrust bearing or slip ring (10b).

9. The power tool (1) as claimed in any of the preceding claims, wherein a second axial end of the resilient member (9b) is in direct contact with the cam follower plate (9c).

10. The power tool (1) as claimed in any of the preceding claims, wherein the resilient member (9b) is a compression spring.

11. The power tool (1) as claimed in any of the preceding claims, comprising gears (12) arranged between the rotor (11b) and the pressure plate (9d).

12. A method of measuring an axial force in a power tool (1), the power tool comprising (1): a housing (7), an electric motor (11) comprising a rotor (11b), a clutch (9) comprising: a pressure plate (9d) configured to be rotatably driven by the rotor (11b), a shaft (3a, 9a) rotationally fixed relative to the cam follower plate (9c), a cam follower plate (9c), and a preloaded resilient member (9b) arranged around the shaft (3a, 9a) and configured to press the cam follower plate (9c) against the pressure plate (9d) to rotationally fix the cam follower plate (9c) relative to the pressure plate (9d); a stationary body (10a) arranged around the shaft (3a, 9a) and being stationary relative to the housing (7), an axial force sensor (10c) arranged on the stationary body (10a), and a thrust bearing or slip ring (10b) arranged around the shaft (3a, 9a), wherein the resilient member (9b) exerts an axial force on the thrust bearing or slip ring (10b), and wherein the axial force sensor (10c) is configured to detect the axial force and convert it to a measurement signal, wherein the method comprises:
a) obtaining a measurement signal from the axial force sensor (10c).

13. The method as claimed in claim 12, comprising b) converting the measurement signal to torque.

14. The method as claimed in claims 12 or 13, wherein the converting involves using a look-up table between axial force and torque or voltage and torque or by means of an equation.

15. The method as claimed in any of claims 12-14, comprising a reference parameter value of the resilient member (9b) when the resilient member (9b) is in a default compressed state with the measurement signal obtained when the resilient member (9b) is in the default compressed state or with said measurement signal converted to axial force, wherein the indicator is configured to provide an indication in case the measurement signal or measurement signal converted to axial force deviates with more than a threshold value from the reference parameter value.

## Patentansprüche

1. Elektrowerkzeug (1), umfassend:
- ein Gehäuse (7),
- einen Elektromotor (11), umfassend einen Rotor (11b),
- eine Kupplung (9), umfassend:
eine Druckplatte (9d), die konfiguriert ist, um durch den Rotor (11b) rotierend angetrieben zu werden,
eine Nockenstößelplatte (9c),
eine Welle (3a, 9a), die relativ zu der Nockenstößelplatte (9c) rotationsfest fixiert ist, und
ein vorgespanntes elastisches Element (9b), das um die Welle (3a, 9a) herum angeordnet ist und konfiguriert ist, um die Nockenstößelplatte (9c) gegen die Druckplatte (9d) zu drücken, um die Nockenstößelplatte (9c) relativ zu der Druckplatte (9d) rotationsfest zu fixieren;
- einen stationären Körper (10a), der um die Welle (3a, 9a) herum angeordnet ist und relativ zu dem Gehäuse (7) stationär ist,
- einen Axialkraftsensor (10c), der an dem stationären Körper (10a) angeordnet ist, und
- ein Widerlager oder einen Gleitring (10b), der mit der Welle (3a, 9a) und mit dem Axialkraftsensor (10c) verbunden ist,
wobei das elastische Element (9b) eine Axialkraft auf das Widerlager oder den Gleitring (10b) ausübt, und
wobei der Axialkraftsensor (10c) konfiguriert ist, um die Axialkraft zu erfassen und sie in ein Messsignal umzuwandeln.

2. Elektrowerkzeug (1) nach Anspruch 1, umfassend eine Verarbeitungsschaltung (13b), die konfiguriert ist, um das Messsignal in ein Drehmoment umzuwandeln.

3. Elektrowerkzeug (1) nach Anspruch 2, wobei die Verarbeitungsschaltung (13b) konfiguriert ist, um das Messsignal unter Verwendung einer Nachschlagetabelle zwischen Axialkraft und Drehmoment oder Spannung und Drehmoment oder mittels einer Gleichung in ein Drehmoment umzuwandeln.

4. Elektrowerkzeug (1) nach Anspruch 2 oder 3, umfassend eine Anzeige, wobei die Verarbeitungsschaltung (13b) konfiguriert ist, um einen Referenzparameterwert des elastischen Elements (9b), wenn das elastische Element (9b) in einem komprimierten Standardzustand ist, mit dem Messsignal, das erhalten wird, wenn das elastische Element (9b) in dem komprimierten Standardzustand ist, oder mit dem in eine Axialkraft umgewandelten Messsignal zu vergleichen, wobei die Anzeige konfiguriert ist, um eine Anzeige bereitzustellen, falls das Messsignal oder das in eine Axialkraft umgewandelte Messsignal um mehr als einen Schwellenwert von dem Referenzparameterwert abweicht.

5. Elektrowerkzeug (1) nach einem der vorstehenden Ansprüche, umfassend eine Anzeige, die konfiguriert ist, um anzuzeigen, wenn das Drehmoment einen vorbestimmten maximalen Drehmomentwert erreicht.

6. Elektrowerkzeug (1) nach einem der vorstehenden Ansprüche, wobei der Axialkraftsensor (10c) zwischen dem Körper (10a) und dem Widerlager oder dem Gleitring (10b) schichtweise eingerichtet ist.

7. Elektrowerkzeug (1) nach einem der vorstehenden Ansprüche, wobei sich das elastische Element (9b) zwischen der Nockenstößelplatte (9c) und dem Widerlager oder dem Gleitring (10b) erstreckt.

8. Elektrowerkzeug (1) nach einem der vorstehenden Ansprüche, wobei ein erstes axiales Ende des elastischen Elements (9b) in direktem Kontakt mit dem Widerlager oder dem Gleitring (10b) steht.

9. Elektrowerkzeug (1) nach einem der vorstehenden Ansprüche, wobei ein zweites axiales Ende des elastischen Elements (9b) in direktem Kontakt mit der Nockenstößelplatte (9c) steht.

10. Elektrowerkzeug (1) nach einem der vorstehenden Ansprüche, wobei das elastische Element (9b) eine Kompressionsfeder ist.

11. Elektrowerkzeug (1) nach einem der vorstehenden Ansprüche, umfassend Zahnräder (12), die zwischen dem Rotor (11b) und der Druckplatte (9d) angeordnet sind.

12. Verfahren zum Messen einer Axialkraft in einem Elektrowerkzeug (1), das Elektrowerkzeug umfassend (1): ein Gehäuse (7), einen Elektromotor (11), umfassend einen Rotor (11b), eine Kupplung (9), umfassend: eine Druckplatte (9d), die konfiguriert ist, um durch den Rotor (11b) rotierend angetrieben zu werden, eine Welle (3a, 9a), die relativ zu der Nockenstößelplatte (9c) rotationsfest fixiert ist, eine Nockenstößelplatte (9c) und ein vorgespanntes elastisches Element (9b), das um die Welle (3a, 9a) herum angeordnet ist und konfiguriert ist, um die Nockenstößelplatte (9c) gegen die Druckplatte (9d) zu drücken, um die Nockenstößelplatte (9c) relativ zu der Druckplatte (9d) rotationsfest zu fixieren; einen stationären Körper (10a), der um die Welle (3a, 9a) herum angeordnet ist und relativ zu dem Gehäuse (7) stationär ist, einen Axialkraftsensor (10c), der auf dem stationären Körper (10a) angeordnet ist, und ein Widerlager oder einen Gleitring (10b), der um die Welle (3a, 9a) herum angeordnet ist, wobei das elastische Element (9b) eine Axialkraft auf das Widerlager oder den Gleitring (10b) ausübt, und wobei der Axialkraftsensor (10c) konfiguriert ist, um die Axialkraft zu erfassen und sie in ein Messsignal umzuwandeln, wobei das Verfahren umfasst:
a) Erhalten eines Messsignals von dem Axialkraftsensor (10c).

13. Verfahren nach Anspruch 12, umfassend b) Umwandeln des Messsignals in Drehmoment.

14. Verfahren nach Anspruch 12 oder 13, wobei das Umwandeln ein Verwenden einer Nachschlagetabelle zwischen Axialkraft und Drehmoment oder Spannung und Drehmoment oder mittels einer Gleichung beinhaltet.

15. Verfahren nach einem der Ansprüche 12 bis 14, umfassend einen Referenzparameterwert des elastischen Elements (9b), wenn das elastische Element (9b) in einem komprimierten Standardzustand ist, mit dem Messsignal, das erhalten wird, wenn das elastische Element (9b) in dem komprimierten Standardzustand ist, oder mit dem in eine Axialkraft umgewandelten Messsignal, wobei die Anzeige konfiguriert ist, um eine Anzeige bereitzustellen, falls das Messsignal oder das in eine Axialkraft umgewandelte Messsignal um mehr als einen Schwellenwert von dem Referenzparameterwert abweicht.

## Revendications

1. Outil électrique (1) comprenant :
- un boîtier (7),
- un moteur électrique (11) comprenant un rotor (11b),
- un embrayage (9) comprenant
un plateau de pression (9d) conçu pour être entraîné en rotation par le rotor (11b),
une plaque de galet suiveur (9c),
un arbre (3a, 9a) fixé en rotation par rapport à la plaque de galet suiveur (9c), et
un élément élastique préchargé (9b) agencé autour de l'arbre (3a, 9a) et conçu pour presser la plaque de galet suiveur (9c) contre le plateau de pression (9d) afin de fixer en rotation la plaque de galet suiveur (9c) par rapport au plateau de pression (9d) ;
- un corps fixe (10a) agencé autour de l'arbre (3a, 9a) et immobile par rapport au boîtier (7),
- un capteur de force axiale (10c) agencé sur le corps fixe (10a), et
- un palier de butée ou une bague collectrice (10b) relié(e) à l'arbre (3a, 9a) et au capteur de force axiale (10c),
dans lequel l'élément élastique (9b) exerce une force axiale sur le palier de butée ou la bague collectrice (10b), et
dans lequel le capteur de force axiale (10c) est conçu pour détecter la force axiale et la convertir en un signal de mesure.

2. Outil électrique (1) selon la revendication 1, comprenant un circuit de traitement (13b) conçu pour convertir le signal de mesure en couple.

3. Outil électrique (1) selon la revendication 2, dans lequel le circuit de traitement (13b) est conçu pour convertir le signal de mesure en couple à l'aide d'une table de correspondance entre la force axiale et le couple ou la tension et le couple ou au moyen d'une équation.

4. Outil électrique (1) selon les revendications 2 ou 3, comprenant un indicateur, dans lequel le circuit de traitement (13b) est conçu pour comparer une valeur de paramètre de référence de l'élément élastique (9b) lorsque l'élément élastique (9b) est dans un état comprimé par défaut avec le signal de mesure obtenu lorsque l'élément élastique (9b) est dans l'état comprimé par défaut ou avec ledit signal de mesure converti en force axiale, dans lequel l'indicateur est conçu pour fournir une indication dans le cas où le signal de mesure ou le signal de mesure converti en force axiale s'écarte de plus d'une valeur seuil de la valeur de paramètre de référence.

5. Outil électrique (1) selon l'une quelconque des revendications précédentes, comprenant un indicateur conçu pour indiquer le moment où le couple atteint une valeur de couple maximale prédéterminée.

6. Outil électrique (1) selon l'une quelconque des revendications précédentes, dans lequel le capteur de force axiale (10c) est pris en sandwich entre le corps (10a) et le palier de butée ou la bague collectrice (10b).

7. Outil électrique (1) selon l'une quelconque des revendications précédentes, dans lequel l'élément élastique (9b) s'étend entre la plaque de galet suiveur (9c) et le palier de butée ou la bague collectrice (10b).

8. Outil électrique (1) selon l'une quelconque des revendications précédentes, dans lequel une première extrémité axiale de l'élément élastique (9b) est en contact direct avec le palier de butée ou la bague collectrice (10b).

9. Outil électrique (1) selon l'une quelconque des revendications précédentes, dans lequel une seconde extrémité axiale de l'élément élastique (9b) est en contact direct avec la plaque de galet suiveur (9c).

10. Outil électrique (1) selon l'une quelconque des revendications précédentes, dans lequel l'élément élastique (9b) est un ressort de compression.

11. Outil électrique (1) selon l'une quelconque des revendications précédentes, comprenant des engrenages (12) agencés entre le rotor (11b) et le plateau de pression (9d).

12. Procédé de mesure d'une force axiale dans un outil électrique (1), l'outil électrique comprenant (1) : un boîtier (7), un moteur électrique (11) comprenant un rotor (11b), un embrayage (9) comprenant : un plateau de pression (9d) conçu pour être entraîné en rotation par le rotor (11b), un arbre (3a, 9a) fixé en rotation par rapport à la plaque de galet suiveur (9c), une plaque de galet suiveur (9c), et un élément élastique préchargé (9b) agencé autour de l'arbre (3a, 9a) et conçu pour presser la plaque de galet suiveur (9c) contre le plateau de pression (9d) afin de fixer en rotation la plaque de galet suiveur (9c) par rapport au plateau de pression (9d) ; un corps fixe (10a) agencé autour de l'arbre (3a, 9a) et étant fixe par rapport au boîtier (7), un capteur de force axiale (10c) agencé sur le corps fixe (10a), et un palier de butée ou une bague collectrice (10b) agencé(e) autour de l'arbre (3a, 9a), dans lequel l'élément élastique (9b) exerce une force axiale sur le palier de butée ou la bague collectrice (10b), et dans lequel le capteur de force axiale (10c) est conçu pour détecter la force axiale et la convertir en un signal de mesure, dans lequel le procédé comprend :
a) l'obtention d'un signal de mesure à partir du capteur de force axiale (10c).

13. Procédé selon la revendication 12, comprenant b) la conversion du signal de mesure en couple.

14. Procédé selon les revendications 12 ou 13, dans lequel la conversion implique l'utilisation d'une table de correspondance entre la force axiale et le couple ou la tension et le couple ou au moyen d'une équation.

15. Procédé selon l'une des revendications 12 à 14, comprenant une valeur de paramètre de référence de l'élément élastique (9b) lorsque l'élément élastique (9b) est dans un état comprimé par défaut avec le signal de mesure obtenu lorsque l'élément élastique (9b) est dans l'état comprimé par défaut ou avec ledit signal de mesure converti en force axiale, dans lequel l'indicateur est conçu pour fournir une indication dans le cas où le signal de mesure ou le signal de mesure converti en force axiale s'écarte de plus d'une valeur seuil de la valeur de paramètre de référence.
